# EUROPEAN PATENT APPLICATION

(11) **EP 3 413 034 A1**
(43) Date of publication of application: **12.12.2018**
(21) Application number: 17175000.3
(22) Date of filing: 08.06.2017
(51) Int. Cl.: G01N 21/64, F24F 11/00, G01J 3/44, G01N 15/14, G01N 15/00

(54) **POLLEN SENSOR AND SENSING METHOD**

(71) Applicant: Koninklijke Philips N.V., 5656 AE Eindhoven (NL)
(72) Inventor: RONDA, Cornelis Reinder, 5656 AE Eindhoven (NL); SUN, Ming, 5656 AE Eindhoven (NL); VAN DER GRAAF, Timothy, 5656 AE Eindhoven (NL)
(74) Representative: de Haan, Poul Erik

(57) **Abstract**

A pollen sensor comprising:
a chamber (13) for housing an air sample having pollen to be identified;
a UV light source (14) for providing excitation light to the chamber;
a visible spectrum light detector (16) for detecting light which has been emitted by the pollen in response to the excitation light; and
a controller (24) for analyzing the detected emitted light,
wherein the controller is adapted to identify a pollen type based on the color spectrum of the received light.

The pollen sensor analyzes fluorescent light from pollen particles, to identify the pollen type based on the color spectrum of received visible light, preferrably one or more ratios of light spectrum components. The invention is also directed to a pollen sensing method.

## Description

### FIELD OF THE INVENTION

This invention relates to a method and apparatus for sensing pollen particles.

### BACKGROUND OF THE INVENTION

It is well known that it is desirable to monitor pollution levels, such as particulate pollutants including pollen. Various sensing devices are known, which for example provide a particle concentration level for particles below a certain size. Optical particle sensing approaches are for example known based on optical scattering.

Pollen are important allergens that may have a serious impact on people's well-being. In addition, they are asthma triggers. To prevent or minimize human exposure, it is important to detect pollen to which humans may be exposed. The information obtained can be used to prompt other actions, for example to vacuum clean the enclosure in which the sensitive person resides or to clean surfaces in such an enclosure. This may be performed automatically, or an alert may be provided to a user to perform the cleaning action manually.

One way to distinguish between different types of particle such as pollen particles is to determine the particle size or particle size distribution. This requires more complex sensing hardware and software than for simply providing a particle count.

As a result, there are no reliable pollen sensors for consumer use. There are a number of reasons for this. Principally, there is not an easy and cheap method to detect and to discriminate between different types of pollen. In many professional pollen sensors, optical microscopy is used, and the pollen are discriminated by their morphology, size and texture.

There remains a need for a low cost system which can discriminate between different types of pollen, which can thus be used in the home environment.

### SUMMARY OF THE INVENTION

The invention is defined by the claims.

According to examples in accordance with an aspect of the invention, there is provided a pollen sensor comprising:
a chamber for housing an air sample having pollen to be identified;
a UV light source for providing excitation light to the chamber;
a visible spectrum light detector for detecting light which has been emitted by the pollen in response to the excitation light; and
a controller for analyzing the detected emitted light,
wherein the controller is adapted to identify a pollen type based on the color spectrum of the received light.

The invention is based on the recognition that different pollen types may be identified based on different fluorescence emission spectra. Thus, by detecting information relating to the color spectrum of the received light, it becomes possible to identify pollen type. This avoids the need for complex particle size and shape measurements and thus enables a low cost consumer device to be formed.

The sensor may even be integrated into another portable device such as a smart phone, as it only needs a small detection volume, light source and light detector. There may be a forced or a passive flow through the chamber,

The light detector is for example adapted to output a plurality of light spectrum components, such as red, green and blue light spectrum components. These multiple components enable light spectrum information to be obtained, for example using a low cost multi-channel photodiode chip.

The controller may be adapted to obtain one or more ratios between the light spectrum components and to identify a pollen type based on the one or more ratios. For example a first ratio of red to blue light spectrum components and a second ratio of blue to green light spectrum components may be obtained. It has been found that these ratios provide a strong discrimination between different pollen types.

A database may be provided which stores a mapping between color spectrum information and pollen types. The pollen sensor can then output a pollen type after interrogating the database.

It is of course possible for the controller, or part of the controller function, to be implemented in a separate external device, so that the controller is not necessarily co-located with the light source and detector.

The sensor may further comprise an input for receiving time of year information, and the controller is adapted to identify a pollen type further based on the time of year information. The time of year information gives season information, and this maybe used to refine the pollen type determination, in that different pollen types will be known to be present at particular times of year.

The sensor may further comprise an input for receiving location information, and the controller is adapted to identify a pollen type further based on the location information. The location information is for example GPS information. The location information again may be used to refine the pollen type determination, in that different pollen types will be known to be present at particular geographical locations.

The controller may be further adapted to obtain a total pollen count based on the total intensity of the detected light. Thus the same system may provide a pollen count as well as a pollen type determination.

A flow device may be provided for creating a flow through the chamber. It may be by convection or by forced air flow. Alternatively, the chamber may collect an air sample entirely passively.

Examples in accordance with another aspect of the invention provide a pollen sensing method comprising:
providing UV excitation light to a chamber in which pollen particles to be sensed are located;
detecting light which has been emitted by the pollen in response to the excitation light; and
identifying a pollen type based on the color spectrum of the received light.

The method may comprise detecting light spectrum components, such as red, green and blue light spectrum components, and obtaining one or more ratios between the light spectrum components thereby to identify a pollen type. A first ratio of red to blue light spectrum components and a second ratio of blue to green light spectrum components may be obtained.

The method may further comprise identifying a pollen type further taking into account time of year information and/or location information and a total pollen count may be obtained based on the total intensity of the detected light.

The method may further comprise providing the pollen type information to a remote entity which collates pollen type information from multiple users. In this way, a pollen atlas may be formed by sharing information from multiple users. This may supplement or be an alternative to a pollen atlas based on professional pollen sensors.

The invention may be implemented at least in part in software.

### BRIEF DESCRIPTION OF THE DRAWINGS

Examples of the invention will now be described in detail with reference to the accompanying drawings, in which:
Figure 1 shows an example of an optical sensor for proving detection of pollen types;
Figure 2 shows light spectrum information for four different pollen types; and
Figure 3 shows a pollen sensing method.

### DETAILED DESCRIPTION OF THE EMBODIMENTS

The invention provides a pollen sensor which analyzes fluorescent visible wavelength light from pollen particles, to identify the pollen type based on the color spectrum of received visible light.

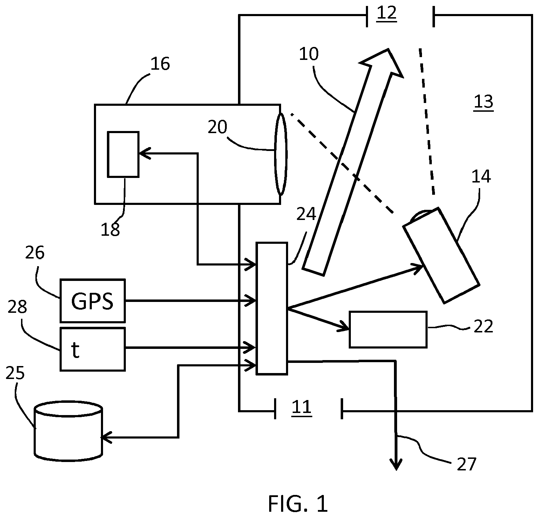

Fig. 1 shows an example of an optical sensor for proving detection of pollen types. There is a gas flow 10 from an inlet 11 to an outlet 12 of the overall sensor device, wherein a chamber 13 is formed between the inlet and outlet. A UV LED 14 is used to illuminate the gas flow to enable optical detection of entrained pollen particles based on optical measurements of emitted fluorescent light. In this example, the UV LED is to one side of the detection volume and the sensing is carried out at the opposite side. However, the sensing may be carried out at any location.

The optical sensor 16 comprises a photodiode sensor 18 and a focusing lens 20 at which emitted fluorescent light is collected. The photodiode sensor is able to determine different color components of the received light so that color spectrum information is obtained. For example, the photodiode sensor may comprise red, green and blue light sensors, implemented as a three-channel silicon photodiode chip.

In the example shown, a heater 22 is used for inducing convective flow through the sensor device. By the resulting buoyancy, the air flows towards the top of the detector, carrying the pollen particles through the detection volume.

A controller 24 controls the processing of the sensor signals and operation of the heater and UV light source.

The detection chamber is for example part of a housing which is placed on a printed circuit board with the electronics to process the optical signal from the pollen particles. The internal shape of the housing is such that leakage of UV LED light as well as ambient light directly towards the photodiode sensor, which could give a background signal, is minimal.

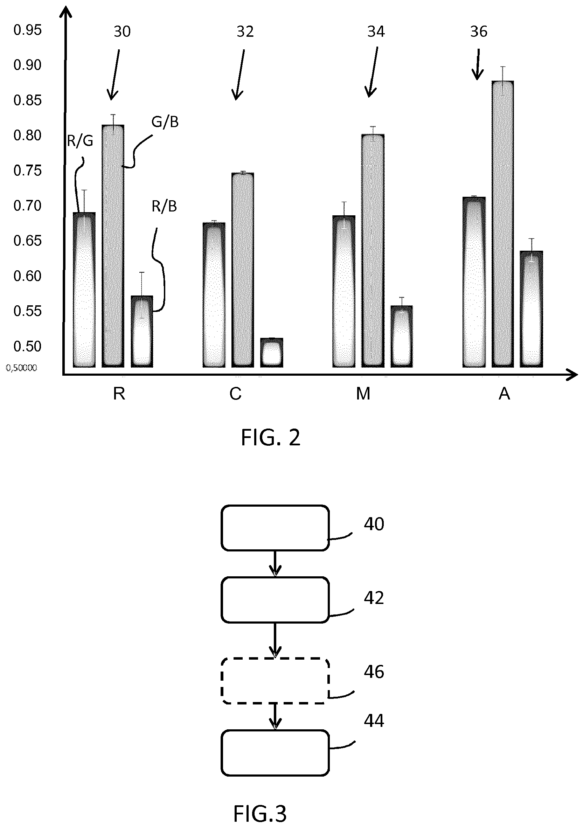

Figure 2 shows a set of light detector readings. The set 30 is for rape pollen, the set 32 is for camellia pollen, the set 34 is for maize pollen and the set 36 is for ambrosia bulgaris pollen. Each set comprise a ratio of red to green as the left bar, a ratio of green to blue as the middle bar and a ratio of red to blue as the right bar. Excitation of the fluorescence was with 365 nm UV LED light.

It can be seen from Figure 2 that for these four examples of pollen, the color ratios give an excellent identification criterion.

It can be seen that R/G ratios for the pollen investigated are almost constant, whereas significant variations are encountered in the ratios R/B and B/G.

Each pollen type may thus be characterized by a set of values for the R/B color ratio and the B/G color ratio. An advantage of these ratios is that they are dimensionless and thus not affected by the detector sensitivity.

The system of Figure 1 for example comprises a database 25 such as a look up table which provides a mapping between ratio values and pollen types.

The use of two ratios provides low computational effort and simple detection. More complex analysis of the color spectrum may be used for example by fitting a line of best fit to a set of measured points. The database 25 may then store a full spectrum function for each pollen type, and pattern matching may be used to match a pollen type to the set of recorded results. However, a ratio method provides a lower cost implementation

In general terms, the detection provides values which relate to the color spectrum of the received light and there is a functional mapping which translates between these values and an identified pollen type.

To improve the discrimination between pollen types, either additional excitation sources with different wavelengths can be employed or further information may be used.

For example, Figure 1 shows a location unit 26 such as a GPS system which provides location information to an input of the controller 24. This gives geographical information which can be used to look up known pollen types present in that location.

Figure 1 also shows a timing unit 28 which provides time of the year information (i.e. the date, which combined with location gives the season), to another input to the controller. This gives season information which can be used to look up known pollen types present at that point in the seasons.

The location unit 26 and timing unit 28 may for example be part of a mobile telephone with which the sensor communicates, for example using Bluetooth or over a Wi-Fi connection. This maintains a low cost for the sensor apparatus. The database may also be external, for example accessed by the mobile telephone with which the sensor apparatus is communicating.

The information from other pollen sensors in the vicinity may also be used, for example provided as input 29. Thus, multiple sensors maybe networked together to improve the detection reliability.

By measuring the overall intensity of all color components, an indication of the total pollen count can be obtained, and this may be enhanced again in combination with geographical and seasonal information. This enables very quick pollen sensing, as pollen sensing information from nearby professional pollens sensors can also be used. The local pollen ratios as detected by the sensor may be assumed to be the same as those recorded by nearby professional sensing apparatus.

The information gathered by the pollen sensor can also be used to generate a pollen atlas. The pollen type information obtained by the sensor may be provided to a remote entity which collates pollen type information from multiple users. This information maybe provided as output 27 to the user and to the remote entity.

Such atlases (for different geographies and seasons) can be made available via the internet. They may use sensor data from the multiple sensors and also based on historical data from professional pollen sensors.

The sensor may be integrated into a smart phone. Another optional feature is then that the smart phone microphone can be used to detect whether the user is impacted by exposure to pollen. This can for example be based on detecting sneezing, due to a pollen allergy, by the user and some signal processing to distinguish the sneezing from other sounds. Of course, a user may also be able to provide a manual input indicating that they are experiencing an allergic reaction. In this way, a personal pollen allergy profile can be obtained. It can be refined even further, based on the simultaneous pollen count and the detection of sneezing, to create a personal pollen sensitivity profile.

The color spectrum analysis may be only one sensing modality. The apparatus may include more conventional scattering detection, for example for performing a particle count. For this purpose, an infrared LED may be used to illuminate the gas flow to enable optical detection of entrained particles based on optical measurements of scattering. In this way, the pollen sensor may additionally provide a simple particle count of particles below a certain size.

Figure 3 shows a pollen sensing method comprising:
in step 40 providing UV excitation light to a chamber in which pollen particles to be sensed are located;
in step 42, detecting light which has been emitted by the pollen in response to the excitation light; and
in step 44 identifying a pollen type based on the color spectrum of the received light.

Other information may be taken into account in step 46, such as location information, seasonal information or information from other low cost sensors and/or professional sensors in the vicinity.

The example above makes use of a heater to induce a convection flow. However, a fan may instead be used to generate a flow, or else the flow may be entirely passive, for example generated just by movement of the senor through the air. Alternatively, there may be no flow through the chamber. Instead a sample may be collected from the air, and the chamber may then be closed during the optical measurement process.

Instead of collecting an air sample for analysis in the chamber, an adhesive tape may be used to collect a sample, for example by wiping from a surface covered with pollen, and the tape is then analyzed in the chamber. This may require correction for any emission by the tape itself, for example by having a calibration measurement of the tape alone first. A separate pollen pre-concentrator may be used, for example using buoyancy, in which pollen are pre-concentrated on an adhesive tape.

The system may be implemented as an optical add-on to a smart phone, containing the necessary optics, so that existing sensors and processing capability of the smart phone may be used. This add-on may also be used to pre-concentrate the pollen to provide increased sensitivity.

In addition, when more than one kind of pollen are present simultaneously, the kind with the higher concentration can be used to estimate the kind(s) with the lower concentration(s) by taking data from a databased for example over the internet. This is based on the insight that in some areas, there is usually is only one dominant type of pollen present, and that there may be time overlap when progressing from one pollen type to another, over time. This could also be used for prediction of the next kind of pollen to be expected, from historical data.

As discussed above, embodiments make use of a controller 24. The controller can be implemented in numerous ways, with software and/or hardware, to perform the various functions required. A processor is one example of a controller which employs one or more microprocessors that maybe programmed using software (e.g., microcode) to perform the required functions. A controller may however be implemented with or without employing a processor, and also maybe implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media maybe fixed within a processor or controller or may be transportable, such that the one or more programs stored thereon can be loaded into a processor or controller.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A pollen sensor comprising:
a chamber (13) for housing an air sample having pollen to be identified;
a UV light source (14) for providing excitation light to the chamber;
a visible spectrum light detector (16) for detecting light which has been emitted by the pollen in response to the excitation light; and
a controller (24) for analyzing the detected emitted light,
wherein the controller is adapted to identify a pollen type based on the color spectrum of the received light.

2. A sensor as claimed in claim 1, wherein the light detector (16) is adapted to output a plurality of light spectrum components, such as red, green and blue light spectrum components.

3. A sensor as claimed in claim 2, wherein the controller (24) is adapted to obtain one or more ratios between the light spectrum components and to identify a pollen type based on the one of more ratios.

4. A sensor as claimed in claim 3, wherein the controller (24) is adapted to obtain a first ratio of red to blue light spectrum components and a second ratio of blue to green light spectrum components:

5. A sensor as claimed in any preceding claim, further comprising a database (25) storing a mapping between color spectrum information and pollen types.

6. A sensor as claimed in any preceding claim, further comprising:
an input for receiving time of year information, and the controller is adapted to identify a pollen type further based on the time of year information; and/or
an input for receiving location information, and the controller is adapted to identify a pollen type further based on the location information.

7. A sensor as claimed in any preceding claim, wherein the controller is further adapted to obtain a total pollen count based on the total intensity of the detected light.

8. A sensor as claimed in any preceding claim, comprising a flow device (22) for providing a flow through the chamber.

9. A pollen sensing method comprising:
(40) providing UV excitation light to a chamber (13) in which pollen particles to be sensed are located;
(42) detecting light which has been emitted by the pollen in response to the excitation light; and
(44) identifying a pollen type based on the color spectrum of the received light.

10. A method as claimed in claim 9, comprising detecting light spectrum components, such as red, green and blue light spectrum components, and obtaining one or more ratios between the light spectrum components thereby to identify a pollen type.

11. A method as claimed in claim 10, comprising obtaining a first ratio of red to blue light spectrum components and a second ratio of blue to green light spectrum components.

12. A method as claimed in any one of claims 9 to 11, further comprising identifying a pollen type further (46) taking into account time of year information and/or location information.

13. A method as claimed in any one of claims 9 to 12, further comprising obtaining a total pollen count based on the total intensity of the detected light.

14. A method as claimed in any one of claims 9 to 13, further comprising providing the pollen type information to a remote entity which collates pollen type information from multiple users.

15. A computer program comprising computer program code means which is adapted, when said computer program is run on a computer, to perform the method of any one of claims 9 to 14.
